# EUROPÄISCHE PATENTSCHRIFT

(11) **EP 0 887 625 B1**
(45) Veröffentlichungstag und Bekanntmachung des Hinweises auf die Patenterteilung: **07.12.2005**
(21) Anmeldenummer: 98110401.1
(22) Anmeldetag: 06.06.1998
(51) Int. Cl.: G01D 5/36

(54) **Optische Positionsmesseinrichtung**
Optical position measuring device
Dispositif optique de mesure de position

(30) Priorität: 25.06.1997 DE 19726935
(43) Veröffentlichungstag der Anmeldung: 30.12.1998
(73) Patentinhaber: Dr. Johannes Heidenhain GmbH, 83292 Traunreut (DE)
(72) Erfinder: Holzapfel, Wolfgang, Dr., 83119 Obing (DE); Mayer, Elmar J., Dr., 83342 Tacherting/Reit (DE)

(56) Entgegenhaltungen:
- AT-B- 394 275
- US-A- 4 678 908
- US-A- 5 065 017
- US-A- 5 235 181
- PATENT ABSTRACTS OF JAPAN vol. 012, no. 377 (P-768), 7. Oktober 1988 (1988-10-07) -& JP 63 122916 A (SOTSUKISHIYA:KK), 26. Mai 1988 (1988-05-26)

## Beschreibung

Die vorliegende Erfindung betrifft eine optische Positionsmeßeinrichtung, bei der neben der Erzeugung inkrementeller Positionsdaten auch die Erzeugung mindestens eines Referenzimpulssignales bei einer definierten Relativlage zweier zueinander beweglicher Objekte möglich ist.

Bekannte optische, inkrementelle Positionsmeßeinrichtungen umfassen neben ein oder mehreren inkrementellen Teilungen auf Maßstab- und Abtastseite in der Regel auch ein oder mehrere Felder mit Referenzmarken bzw. Referenzmarkenstrukturen, über die entsprechende Referenzimpulssignale erzeugbar sind. Die Referenzimpulssignale dienen hierbei zur eindeutigen Identifizierung definierter Relativpositionen der zwei zueinander beweglichen Elemente, deren Relativbewegung mit Hilfe der optischen Positionsmeßeinrichtung erfaßt werden soll. Beispielsweise handelt es sich bei den zueinander beweglichen Elementen um das Werkstück sowie das Werkzeug einer numerisch gesteuerten Werkzeugmaschine.

Üblicherweise besteht die Referenzmarkenstruktur auf Maßstab- und Abtastseite aus einer Anzahl alternierend angeordneter Bereiche mit optisch unterschiedlichen Eigenschaften. Je nachdem, ob es sich um eine Positionsmeßeinrichtung handelt, die im Durchlicht oder aber im Auflicht betrieben wird, sind die Bereiche entweder optisch durchlässig und nicht-durchlässig oder aber reflektierend und nicht-reflektierend ausgebildet. Sowohl auf Seiten des Maßstabes wie auch auf Seiten der Abtasteinheit sind in der Regel die identischen periodischen Strukturen in einem Referenzmarkenfeld angeordnet. Die Beleuchtung erfolgt dabei mit einem kollimierten Strahlenbündel. Jedem durchlässigen Bereich auf Maßstabseite ist bei der entsprechenden Relativposition exakt ein durchlässiger Bereich auf der Abtastseite zugeordnet. In diesem Zusammenhang sei etwa auf die DE 18 14 785 der Anmelderin verwiesen.

Beispielsweise aus der US 5,065,017 ist desweiteren bekannt, die Referenzmarkenstrukturen auf Maßstab- und Abtastseite dahingehend zu optimieren, daß bei einer definierten Relativposition von Maßstab und Abtasteinheit ein ausgeprägtes Signalmaximum resultiert und Nebenmaxima möglichst unterdrückt werden. Dies wird durch bestimmte aperiodische Verteilungen der Bereiche mit unterschiedlichen optischen Eigenschaften erreicht. Sowohl auf Maßstab- als auch auf Abtastseite sind hierzu jedoch identische Verteilungen der entsprechenden Bereiche vorgesehen.

Neben bislang diskutierten optischen Positionsmeßeinrichtungen, bei denen Maßstab- und Abtastteilungen über ein kollimiertes Strahlenbündel beleuchtet werden, sind desweiteren auch optische Positionsmeßeinrichtungen mit einer sogenannten divergenten Beleuchtung bekannt. Bei derartigen Positionsmeßeinrichtungen ist keine voluminöse Kollimations-Optik zwischen der Lichtquelle und der ersten, von den Strahlenbündeln durchlaufenen Teilungsstruktur erforderlich, so daß insbesondere ein kompakter Aufbau der optischen Positionsmeßeinrichtung möglich ist. Bezüglich derartiger Positionsmeßeinrichtungen sei beispielsweise auf die US 4,823,001 verwiesen.

Auch bei diesen optischen Positionsmeßeinrichtungen ist wünschenswert, wenn Referenzimpulssignale bezüglich bestimmter Relativpositionen von Maßstab und Abtasteinheit erzeugbar sind.
Die oben erwähnten Möglichkeiten zur Erzeugung eines Referenzimpulssignales erweisen sich bei einer vorgesehenen divergenten Beleuchtung in einer optischen Positionsmeßeinrichtung jedoch als nicht geeignet. Bei diesen Varianten wird bei der Dimensionierung der entsprechenden Strukturen auf Maßstab- und Abtastseite stets von einem kollimierten Strahlenbündel ausgegangen, das die Strukturen beleuchtet.

Aufgabe der vorliegenden Erfindung ist es daher, für eine optische Positionsmeßeinrichtung, die keine Kollimationsoptik erfordert, eine Möglichkeit zu schaffen, ein hochauflösendes Referenzimpulssignal an ein oder mehreren definierten Positionen zu erzeugen.

Diese Aufgabe wird gelöst durch eine optische Positionsmeßeinrichtung mit den Merkmalen des Anspruches 1.

Vorteilhafte Ausführungsformen der erfindungsgemäßen optischen Positionsmeßeinrichtung ergeben sich aus den Maßnahmen in den abhängigen Ansprüchen.

Erfindungsgemäß ist nunmehr vorgesehen, insgesamt drei unregelmäßige bzw. aperiodische Referenzimpuls-Strukturen derart aufeinander abzustimmen, daß auch im Fall einer divergenten Beleuchtung der verschiedenen Strukturen ein möglichst ausgeprägtes Maximum des Referenzimpulssignales bei ein oder mehreren definierten Relativpositionen von Maßstab und Abtasteinheit resultiert. Hierbei werden eine Referenzimpuls-Sendestruktur, eine Referenzimpuls-Abtaststruktur sowie eine Referenzimpuls-Maßstabstruktur über ein geeignetes Optimierungsverfahren gezielt aufeinander abgestimmt.

Es ergibt sich derart die Möglichkeit, auch bei einer äußerst kompakt aufgebauten optischen Positionsmeßeinrichtung einen schmalen, hochauflösenden Referenzimpuls zu erzeugen. Der kompakte Aufbau des Gesamtsystems resultiert hierbei insbesondere aufgrund des möglichen divergenten Strahlenganges zwischen der Lichtquelle und der Referenzimpuls-Sendestruktur; in diesem Bereich ist keine ansonsten übliche Kollimationsoptik vorgesehen. Die erfindungsgemäßen Maßnahmen lassen sich dabei sowohl in Durchlicht- als auch in Auflicht-Ausführungen entsprechender Positionsmeßeinrichtungen einsetzen. Ferner können sowohl Positionsmeßeinrichtungen zur Erfassung von Linearbewegungen wie auch Positionsmeßeinrichtungen zur Erfassung von rotatorischen Bewegungen damit ausgestattet werden.

Als weiterer Vorteil der erfindungsgemäßen optischen Positionsmeßeinrichtung ist aufzuführen, daß bei bestimmten Anordnungen der Strukturen zur Erzeugung der Referenzimpulssignale relativ zu einer Inkrementalteilung eine hohe Moiré-Unempfindlichkeit resultiert. Insbesondere bei einer eventuellen geringfügigen Relativdrehung von Maßstabteilung und Abtasteinheit um eine Achse senkrecht zur Meßrichtung verändert sich die Form und Lage des erfindungsgemäß erzeugten Referenzimpulssignales praktsch nicht.

Besonders vorteilhaft erweisen sich auch die vorgeschlagenen Maßnahmen, um neben einem ersten Referenzimpulssignal auf die erfindungsgemäße Art und Weise ein hierzu komplementäres, zweites Referenzimpulssignal zu erzeugen. Derart läßt sich die Detektionssicherheit bei der Erfassung bzw. Auswertung der Referenzimpulssignale steigern.

Weitere Vorteile der erfindungsgemäßen optischen Positionsmeßeinrichtung ergeben sich aus der nachfolgenden Beschreibung von Ausführungsbeispielen anhand der beiliegenden Zeichnungen.

Dabei zeigt
- Figur 1: ein schematisiert dargestelltes Ausführungsbeispiel verschiedener Strukturen in der erfindungsgemäßen optischen Positionsmeßeinrichtung, ausgebildet als Durchlicht-Variante;
- Figur 2a: ein erstes Ausführungsbeispiel eines erfindungsgemäß erzeugten Referenzimpulssignales;
- Figur 2b: ein zu dem Referenzimpulssignal aus Figur 2a zweites, komplementäres Referenzimpulssignal;
- Figur 2c: das aus den beiden Referenzimpulssignalen in Figur 2a und 2b gebildete resultierende Referenzimpulssignal;
- Figur 3a: den Verlauf eines Referenzimpulssignales, resultierend aus einem zweiten Ausfühurungsbeispiel;
- Figur 3b: ein weiteres Ausführungsbeispiel eines zweiten, komplementären Referenzimpulssignales, nunmehr zum Referenzimpulssignal aus Figur 3a;
- Figur 4: ein Flußdiagramm zur Erläuterung eines Optimierungsverfahrens, nach dem geeignete Verteilungen der verschiedenen Strukturen bestimmt werden können;
- Figur 5a-5d: jeweils verschiedene Möglichkeiten der Anordnung der erfindungsgemäß ausgebildeten Referenzimpuls-Maßstabsstrukturen relativ zur Inkrementalteilung auf einem Maßstab;
- Figur 6: eine Draufsicht auf ein weiteres Ausführungsbeispiel der erfindungsgemäßen optischen Positionsmeßeinrichtung in einer Auflicht-Ausführung.

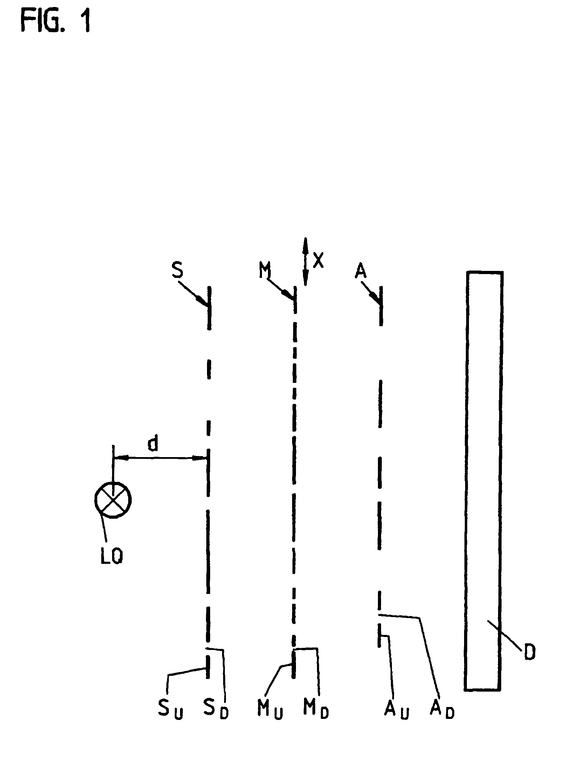

Eine erste Ausführungsform der erfindungsgemäßen optischen Positionsmeßeinrichtung ist in einer schematischen Teildarstellung in Figur 1a gezeigt. Dargestellt sind hierbei lediglich diejenigen Komponenten der als Duchlicht-Variante ausgebildeten Positionsmeßeinrichtung, die zur erfindungsgemäßen Erzeugung eines Referenzimpulssignales dienen. Auf die Darstellung derjenigen Teile, über die in bekannter Art und Weise inkrementelle Positionssignale erzeugbar sind, wurde aus Übersichtlichkeitsgründen verzichtet.
Die erfindungsgemäße optische Positionsmeßeinrichtung umfaßt zur Erzeugung mindestens eines Referenzimpulssignales eine Lichtquelle LQ, beispielsweise ausgebildet als LED. In Richtung der Strahlausbreitung nachgeordnet folgt der Lichtquelle LQ erfindungsgemäß eine Referenzimpuls-Sendestruktur S, die eine unregelmäßige bzw. aperiodische erste Verteilung von Bereichen S_{U}, S_{D} mit unterschiedlichen optischen Eigenschaften aufweist. Im dargestellten Ausführungsbeispiel einer Durchlicht-Variante der erfindungsgemäßen optischen Positionsmeßeinrichtung sind die Bereiche S_{D}, S_{U} der Referenzimpuls-Sendestruktur S alternierend optisch durchlässig und nicht-durchlässig ausgebildet. Zwischen der Lichtquelle LQ und der Referenzimpuls-Sendestruktur S ist beim dargestellten Ausführungsbeispiel im Gegensatz zu bekannten optischen Positionsmeßeinrichtungen keine zusätzliche Optik angeordnet, die dort zur Kollimation der von der Lichtquelle gelieferten Strahlenbündel dient. Bei der erfindungsgemäßen optischen Positionsmeßeinrichtung ist demzufolge ein divergenter Strahlengang zwischen der Lichtquelle und der nachgeordneten Referenzimpuls-Sendestruktur vorgesehen, d..h. eine divergente Beleuchtung. Derart ist ein äußerst kompakter Aufbau derselben möglich. Grundsätzlich kann alternativ zur gezeigten Variante ohne jegliche Kollimatoroptik auch eine Lichtquelle LQ eingesetzt werden, der zumindest eine Optik zur Teilkollimation vorgeordnet ist; nach wie vor resultiert jedoch eine divergente Abstrahlcharakteristik der Lichtquelle. Die letztgenannte Variante eignet sich insbesondere, wenn detektionsseitig eine größere Signalintensität erforderlich sein sollte. Zur geeigneten Wahl einer Verteilung der verschiedenen Bereiche S_{U}, S_{D} innerhalb der Referenzimpuls-Sendestruktur S sei auf die nachfolgende Beschreibung verwiesen.

Beim Ausführungsbeispiel der Figur 1 ist die Lichtquelle LQ in einem definierten Abstand d von der Referenzimpuls-Sendestruktur S entfernt angeordnet. Neben der dargestellten Variante, in der d > 0 gewählt ist, kann der Abstand d zwischen der Lichtquelle LQ und der Referenzimpuls-Sendestruktur S jedoch auch deutlich kleiner gewählt werden, bis hin zum Spezialfall d ≈ 0. Auf diese Art und Weise läßt sich die Divergenz der Lichtquelle LQ variieren. Je nach dem gewählten Abstand d verändern sich die zu wählenden Strukturen zur Erzeugung des Referenzimpulssignales.

In Richtung der Strahlausbreitung folgt der Referenzimpuls-Sendestruktur S nachgeordnet eine Referenzimpuls-Maßstabstruktur M, die eine zweite unregelmäßige Verteilung von Bereichen M_{U}, M_{D} mit zwei unterschiedlichen optischen Eigenschaften aufweist. Die Referenzimpuls-Maßstabstruktur M ist hierbei in Meßrichtung x relativ beweglich zur Referenzimpuls-Sendestruktur S angeordnet. Die auf Seiten des Maßstabes in x-Richtung an die Referenzimpuls-Maßstabstruktur M angrenzenden Bereiche sind im Fall der Durchlicht-Variante undurchlässig ausgebildet. Vom abgetasteten Maßstab ist demzufolge in Figur 1 lediglich ein Teilbereich dargestellt.

Desweiteren umfaßt die erfindungsgemäße optische Positionsmeßeinrichtung eine Referenzimpuls-Abtaststruktur A, mit einer dritten unregelmäßigen Verteilung von Bereichen A_{U}, A_{D}, die unterschiedliche optische Eigenschaften aufweisen. Der Referenzimpuls-Abtaststruktur A ist ein optoelektronisches Detektorelement D nachgeordnet, über das die Strahlenbündel erfaßt werden, die die drei Referenzimpuls-Strukturen S, M, A durchlaufen haben und je nach Relativposition der verschiedenen -Strukturen S, M, A ein bestimmtes Intensitätsmuster in der Detektorebene erzeugen. Nicht mehr dargestellt ist in Figur 1 eine dem Detektorelement D nachgeordnete, bekannte Auswerteelektronik.

Neben der in Figur 1 schematisiert dargestellten Anordnung der verschiedenen Komponenten der erfindungsgemäßen optischen Positionsmeßeinrichtung existieren selbstverständlich alternative Anordnungsmöglichkeiten, die sich beispielsweise hinsichtlich der Abstände der einzelnen Komponenten voneinander unterscheiden. So kann etwa die Referenzimpuls-Sendestruktur S wie oben erwähnt unmittelbar vor der Lichtquelle LQ angeordnet werden. Ferner könnte die Referenzimpuls-Sendestruktur als Strukturierung der lichtemittierenden Fläche einer geeigneten Lichtquelle ausgebildet werden. Eine weitere Möglichkeit zur Realisierung der Referenzimpuls-Sendestruktur besteht darin, eine Lichtquelle zu wählen, die eine der -Sendestruktur entsprechende räumliche Abstrahlcharakteristik aufweist. Desweiteren ist es möglich, die Referenzimpuls-Abtaststruktur A durch eine Strukturierung der lichtempfindlichen Fläche des Detektorelementes D zu bilden usw..

In der dargestellten Ausführungsform der optischen Positionsmeßeinrichtung sind gegenüber der Referenzimpuls-Maßstabstruktur M die restlichen, in Figur 1 dargestellten Komponenten wie Lichtquelle LQ, Referenzimpuls-Sendestruktur S, Referenzimpuls-Abtaststruktur A und optoelektronischem Detektorelement D beweglich in Meßrichtung x angeordnet. Die letztgenannten Komponenten LQ, S, A und D können beispielsweise auf einem Trägerelement in einer geeignet ausgebildeten Abtasteinheit angeordnet sein, die gegenüber der Referenzimpuls-Maßstabstruktur M verschiebbar ist. Die Referenzimpuls-Maßstabstruktur M ist dabei auf einem geeigneten Maßstab angeordnet, der etwa aus einem Glas-Teilungsträger besteht, auf dem zudem auch ein oder mehrere bekannte Inkrementalteilungen angeordnet sind. Maßstab und Abtasteinheit sind z.B. mit zwei zueinander beweglichen Teilen einer Werkzeugmaschine verbunden, deren Relativposition über die erfindungsgemäße optische Positionsmeßeinrichtung hochgenau bestimmt werden soll.

Wie bereits mehrfach angedeutet, ist in Figur 1 eine Durchlicht-Variante der erfindungsgemäßen optischen Positionsmeßeinrichtung dargestellt. Die jeweiligen Bereiche S_{U}, S_{D}, M_{U}, M_{D}, A_{U}, A_{D} der verschiedenen Strukturen S, M, A mit unterschiedlichen optischen Eigenschaften sind daher durchlässig und nicht-durchlässig für die verwendete Strahlungswellenlänge ausgebildet. Im Fall einer Auflicht-Ausführungsform wäre demgegenüber etwa die Referenzimpuls-Maßstabstruktur M dergestalt auszubilden, daß reflektierende und nicht-reflektierende Bereiche entsprechend unregelmäßig angeordnet werden. Auf Seiten der Referenzimpuls-Sende- und Abtaststruktur wären ebenfalls wieder alternierend angeordnete durchlässige und nicht-durchlässige Bereiche vorzusehen. In einer weiteren Ausführungsform wäre es schließlich möglich, die Bereiche mit unterschiedlichen optischen Eigenschaften derart auszugestalten, daß Bereiche vorgesehen werden, die eine feine Gitterstrukturierung aufweisen, während die anderen Bereiche keine derartige Strukturierung besitzen. Es existieren somit ein Reihe von Möglichkeiten, wie die Bereiche mit unterschiedlichen optischen Eigenschaften ausgestaltet werden können.

Erfindungsgemäß werden die insgesamt drei Verteilungen von Bereichen S_{U}, S_{D}, M_{U}, M_{D}, A_{U}, A_{D} mit verschiedenen optischen Eigenschaften derart aufeinander abgestimmt bzw. entsprechend gewählt, daß im Fall einer definierten Relativpositon der zueinander beweglichen Strukturen über das Detektorelement D ein Referenzimpulssignal mit hinreichender Intensität resultiert.

Zudem ist eine ausreichende Unterdrückung eventueller Nebenmaxima sichergestellt.
Insbesondere ist bei den optimierten Verteilungen gewährleistet, daß eine Wechselwirkung der aus einem Bereich (M_{U}, M_{D}) der Referenzimpuls-Maßstabstruktur (M) kommenden Strahlenbündel mit mehreren Bereichen (A_{U}, A_{D}) der Referenzimpuls-Abtaststruktur (A) resultiert. Dies bedeutet etwa im Fall einer reflektierend bzw. nicht-reflektierend ausgebildeten Referenzimpuls-Maßstabstruktur (M) und einer durchlässig bzw. nicht-durchlässig ausgebildeten Referenzimpuls-Abtaststruktur (A), daß bei einer definierten Relativposition Strahlenbündel aus einem Bereich (M_{U}, M_{D}) der Referenzimpuls-Maßstabstruktur (M_{U}, M_{D}) mehrere optisch durchlässige Bereiche (A_{D}) der Referenzimpuls-Abtaststruktur (A) durchtreten.

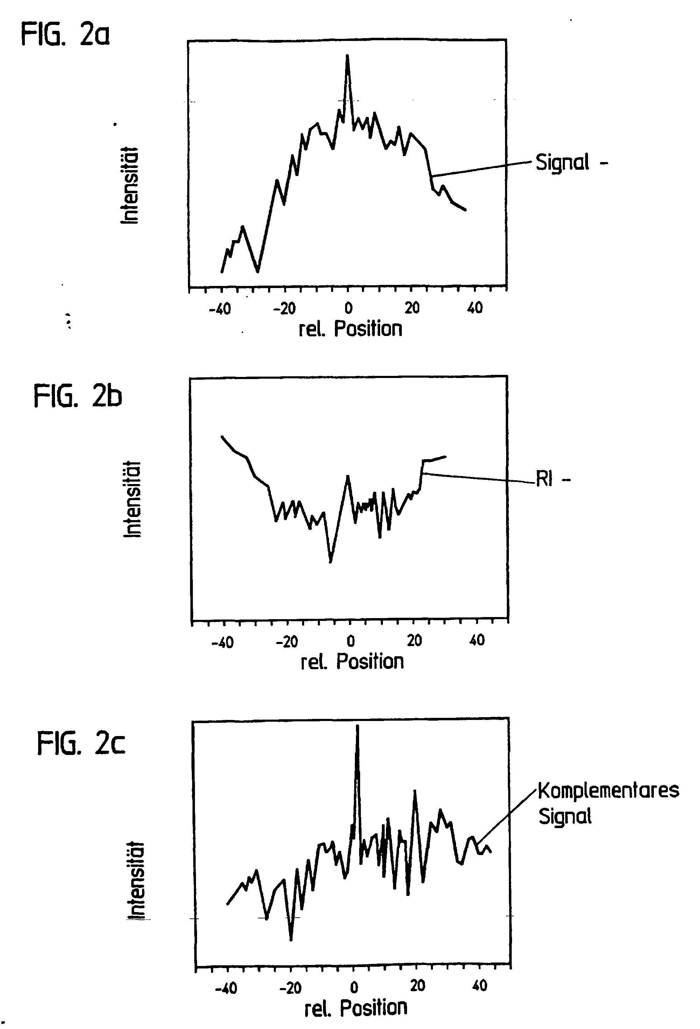

Der Intensitätsverlauf eines Referenzimpulssignales, der sich an einer mit "0" bezeichneten Relativposition von Maßstab und Abtasteinheit mit erfindungsgemäß gewählten Verteilungen ergibt, ist in Figur 2a dargestellt. Aufgund der geeignet aufeinander abgestimmten Verteilungen von Bereichen S_{U}, S_{D}, M_{U}, M_{D}, A_{U}, A_{D} unterschiedlicher optischer Eigenschaften ist eine hinreichende Signalintensität bzw. ausreichender Signal-Nutzanteil bei der Position "0" von Maßstab und Abtasteinheit gewährleistet.

Selbstverständlich kann die erfindungsgemäß ausgebildete optische Positionsmeßeinrichtung nicht nur an einer einzigen definierten Relativposition der zueinander beweglichen Teile mit derartigen Strukturen zur Erzeugung eines Referenzimpulssignales ausgestattet werden; es ist vielmehr möglich, an verschiedenen Positionen des Maßstabes entsprechende Felder mit Referenzimpuls-Maßstabstrukturen M gemäß Figur 1 anzuordnen.

Darüberhinaus sei an dieser Stelle erwähnt, daß die verwendeten Begriffe hinsichtlich Sende-, Maßstab- und Abtaststrukturen sowie die Relativanordnung der zueinander beweglichen Teile lediglich beispielhaft zu verstehen sind. Es ist demzufolge sehr wohl auch ein Vertauschen derjenigen Elemente möglich, die diese Funktionen übernehmen. Beispielsweise könnte auch das im Beispiel als erstes durchlaufene Gitter als Maßstabteilung fungieren etc..

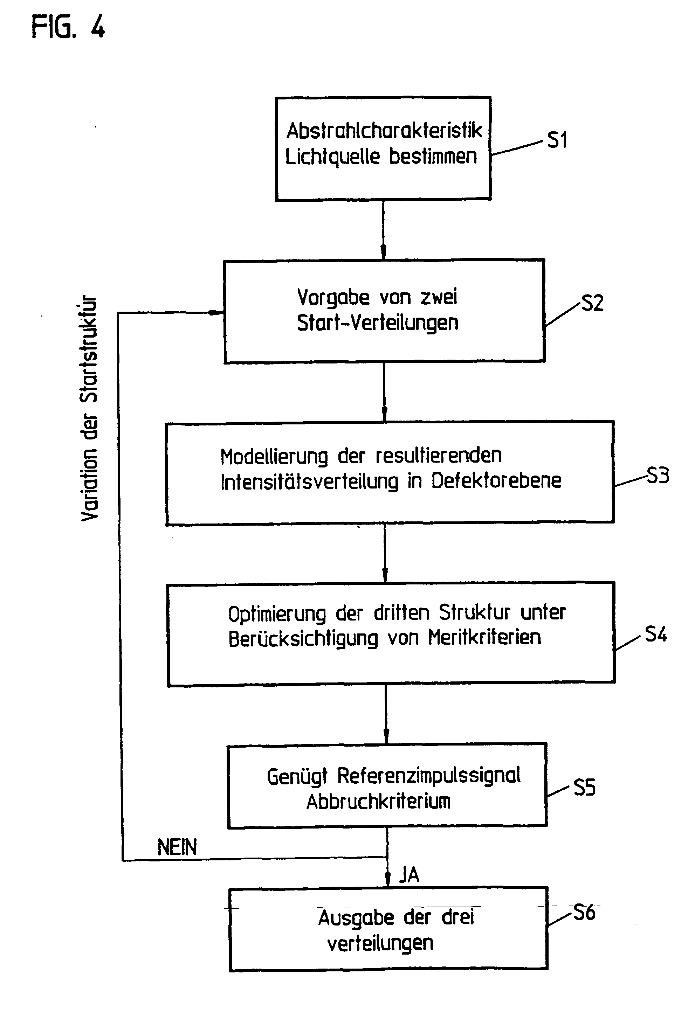

Die unregelmäßigen Verteilungen der Bereiche S_{U}, S_{D}, M_{U}, M_{D}, A_{U}, A_{D} mit unterschiedlichen optischen Eigenschaften zur Erzeugung eines Referenzimpulssignales bei einer definierten Relativposition der zwei zueinander beweglichen Teile ergeben sich über ein nachfolgend anhand von Figur 4 erläutertes Optimierungsverfahren. Hierbei handelt es sich um ein mögliches Ausführungsbeispiel eines geeigneten Optimierungsverfahrens, d.h. es sind durchaus alternative Varianten zur Ermittlung der verschiedenen Verteilungen einsetzbar. Sämtliche Optimierungsverfahren werden dabei vorzugsweise numerisch mit Hilfe eines geeigneten Rechners durchgeführt. Ziel der Optimierungsverfahren ist hierbei, daß die Verteilungen der im Fall einer Durchlicht-Variante durchlässigen und nicht-durchlässigen Bereiche S_{U}, S_{D}, M_{U}, M_{D}, A_{U}, A_{D} auf Seiten der verschiedenen Strukturen S, M und A bei der zu erfassenden Relativposition "0" ein Referenzimpulssignal hinreichender Intensität gewährleisten. Eventuell resultierende Nebenmaxima sollen wegen der geforderten Detektionssicherheit für das Referenzimpulssignal möglichst unterdrückt werden.

Beim Optimierungs-Verfahren gemäß Figur 4 wird im ersten Schritt S1 die Abstrahlcharakteristik einer divergenten Lichtquelle LQ, d.h. die entsprechenden Parameter bestimmt. Im nächsten Schritt S2 werden dann zwei der drei unregelmäßigen Verteilungen von Bereichen mit unterschiedlichen optischen Eigenschaften willkürlich vorgegeben. Beispielsweise kann die Verteilung der verschiedenen Bereiche für die Referenzimpuls-Sendestruktur S sowie die Verteilung für die Referenzimpuls-Maßstabstruktur M als Startstrukturen vorgegeben werden. Grundsätzlich könnten jedoch auch zwei andere Strukturen willkürlich vorgegeben werden.
Auf Grundlage der Verteilungen der beiden Strukturen wird im nachfolgenden Schritt S3 des Optimierungs-Verfahrens die daraus resultierende Intensitätsverteilung in einer Detektorebene numerisch modelliert bzw. bestimmt. In einer praktikablen Ausführungsform des Optimierungs-Verfahrens wird bei der Bestimmung der resultierenden Intensitätsverteilung im Schritt S3 von einer Positonsmeßeinrichtung ausgegangen, die im Schattenwurf betrieben wird. Selbstverständlich können unter Inkaufnahme eines höheren Rechenaufwandes dabei auch Beugungseffekte berücksichtigt werden.
Nachdem die Intensitätsverteilung in der Detektorebene bekannt ist, wird die Verteilung der Bereiche unterschiedlicher optischer Eigenschaften auf Seiten der Referenzimpuls-Abtaststruktur A unter Berücksichtigung einzelner, sogenannter Merit-Kriterien im Schritt S4 optimiert. Es wird demzufolge die dritte, bislang noch nicht vorgegebene Verteilung der Referenzimpuls-Abtaststruktur A in Abhängigkeit der beiden vorgegeben Startstrukturen S, M optimiert. Geeignete Merit-Kriterien für die Optimierung der dritten Verteilung A sind etwa der möglichst große Modulationsgrad des Referenzimpulssignales und/oder der resultierende Nutzanteil des Referenzimpulssignales in der Detektorebene. Zur eigentlichen Optimierung unter Berücksichtigung der erwähnten Merit-Kriterien wird die Intensitätsverteilung des Referenzimpulssignales in der Detektorebene betrachtet, während die Verteilung der Bereiche unterschiedlicher optischer Eigenschaften auf Seiten der Referenzimpuls-Abtaststruktur A variiert wird.
Im Schritt S5 erfolgt jeweils eine Überprüfung, inwieweit die aktuelle Kombination der drei Verteilungen und das daraus resultierende Referenzimpulssignal einem bestimmten Abbruchkriterium genügen. Ist dies der Fall, so wird das Optimierungsverfahren abgebrochen und im Schritt S6 die entsprechenden Verteilungen für die Bereiche mit unterschiedlichen optischen Eigenschaften der drei Strukturen S, M und A ausgegeben.
Sollten sich die vorgegebenen Abbruchkriterien nicht über das Optimieren der dritten Verteilung bzw. Struktur erfüllen lassen, so wird im nächsten Durchlauf des Algorithmus im Schritt S2 eine der Startstrukturen variiert und eine der anderen Strukturen in der beschriebenen Art und Weise optimiert.

Auf diese Art und Weise können die drei Verteilungen der Bereiche der Referenzimpuls-Sendestruktur S, der Referenzimpuls Maßstabstruktur M sowie der Referenzimpuls-Abtaststruktur A schrittweise optimiert werden, bis das resultierende Referenzimpulssignal den vorgegebenen Anforderungen entspricht.

Die mittels eines derartigen Optimierungsalgorithmus bestimmten drei Verteilungen für die Bereiche unterschiedlicher optischer Eigenschaften sind für das in Figur 2a dargestellte Ausführungsbeispiel eines Referenzimpulssignales in Tabelle 1 a aufgeführt.

**Tabelle 1a**

| |
|---|
| Referenzimpuls-Sendestruktur (11 Bereiche, Breite je 40µm) |
| durchlässige Bereiche: 1, 4, 6, 10 |
| Referenzimpuls-Maßstabstruktur (45 Bereiche, Breite je 20µm) |
| durchlässige Bereiche: 1, 3, 5, 6, 7, 8, 9, 14, 15, 17, 19, 21, 24, 28, 33, 34, 35, 39, 40, 43, 44 |
| Referenzimpuls-Abtaststruktur (23 Bereiche, Breite je 40µm) |
| durchlässige Bereiche: 1, 2, 5, 7, 8, 10, 12, 15, 20, 21, 22, 23 |

Hierbei geben die in Tabelle 1a aufgeführten Zahlen, die den Verteilungen der Referenzimpuls-Sendestruktur, -Maßstabstruktur und -Abtaststruktur zugeordnet sind, die Nummern der durchlässigen Teilbereiche der jeweiligen Struktur an, wenn diese Strukturen in eine Anzahl von gleich breiten Teilbereichen unterteilt werden. Die Gesamtheit der jeweiligen Teilbereiche bildet jeweils ein Feld. Im Fall der Referenzimpuls-Sendestruktur umfaßt das komplette Feld 11 Teilbereiche mit einer Breite in Meßrichtung von je 40µm. Das Feld mit der Referenzimpuls-Maßstabstruktur umfaßt 45 Teilbereiche, die jeweils 20µm breit sind. Das Feld mit der Referenzimpuls-Abtaststruktur weist 20 Teilbereiche auf, die jeweils 40µm breit sind. Bei diesem Ausführungsbeispiel wurde desweiteren jeweils von einem Abstand von 0,7mm zwischen Lichtquelle und Referenzimpuls-Sendestruktur, zwischen Referenzimpuls-Sendestruktur und Referenzimpuls-Maßstabstruktur sowie zwischen Referenzimpuls-Maßstabstruktur und Referenzimpuls-Abtaststruktur ausgegangen.

Im Fall einer Auflicht-Variante der erfindungsgemäßen Positionsmeßeinrichtung würden die angegebenen Zahlen bei der Referenzimpuls-Maßstabstruktur natürlich den reflektierenden Bereichen entsprechen; die beiden anderen Strukturen könnten hingegen identisch zu den durchlässig/undurchlässig ausgebildeten Referenzimpuls-Sende- und Abtaststrukturen der Durchlicht-Variante ausgebildet werden.

Die in Tabelle 1a dargestellte Variante für die drei Verteilungen der Bereiche auf Seiten der Referenzimpuls-Strukturen S, M und A liefert ein ca. 20µm breites Referenzimpulssignal für eine Inkrementalteilung mit einer Teilungsperiode von 20µm.

In der nachfolgenden Tabellen 1b ist ein Ausführungsbeispiel einer erfindungsgemäßen Verteilung von Bereichen der verschiedenen Strukturen zur Erzeugung eines komplementären, zweiten Referenzimpulssignales zum ersten Referenzimpulssignal aus Figur 1a bzw. Tabelle 1a aufgeführt. Dieses Ausführungsbeispiel unterscheidet sich dabei vom vorherigen Ausführungsbeispiel durch die anders optimierte Referenzimpuls-Abtaststruktur, d.h. die beiden anderen Strukturen sind identisch zum vorigen Beispiel.

**Tabelle 1b**

| |
|---|
| Referenzimpuls-Sendestruktur (11 Bereiche, Breite je 40µm) |
| durchlässige Bereiche: 1, 4, 6, 10 |
| Referenzimpuls-Maßstabstruktur (45 Bereiche, Breite je 20µm) |
| durchlässige Bereiche: 1, 3, 5, 6, 7, 8, 9, 14, 15, 17, 19, 21, 24, 28, 33, 34, 35, 39, 40, 43, 44 |
| Referenzimpuls-Abtaststruktur (23 Bereiche, Breite je 40µm) |
| durchlässige Bereiche: 3, 4, 9, 11, 13, 14, 18, 19 |

Es läßt sich mit einer derartigen Verteilung demzufolge neben dem oben erwähnten ersten Referenzimpulssignal ein weiteres, zweites Referenzimpulssignal erzeugen, das nachfolgend als komplementäres Signal zum ersten Referenzimpulssignal bezeichnet sei. Das in Figur 2b dargestellte erste Beispiel eines komplementären Referenzimpulssignales kann auch als Pseudo-Gegentaktsignal bezeichnet werden. Der entsprechende Signalverlauf des Referenzimpulssignales, wie er aus einer Verteilung gemäß Tabelle 1b resultiert, ist in Figur 2b dargestellt.

Mit Hilfe eines zur Verfügung stehenden komplementären Referenzimpulssignales läßt sich die Detektionssicherheit hinsichtlich dieses Signales vergrößern, insbesondere das Signal-Rausch-Verhältnis vergrößern. So werden dann die beiden einzelnen Referenzimpulssignale gemäß Figur 2a und Figur 2b auf elektronischem Wege geeignet miteinander kombiniert, indem die beiden Referenzimpulssignale in Differenz geschaltet werden. Es ergibt sich letztlich ein resultierendes Referenzimpulssignal I_{S} = Iₐ - I_{b}, wie es in Figur 2c dargestellt ist. Bei dem in Figur 2c dargestellten Signalverlauf ist deutlich der nunmehr vergrößerte Nutzanteil des resultierenden Referenzimpulssignales im Vergleich zu den beiden Einzelsignalen in den Figuren 2a und 2b erkennbar.

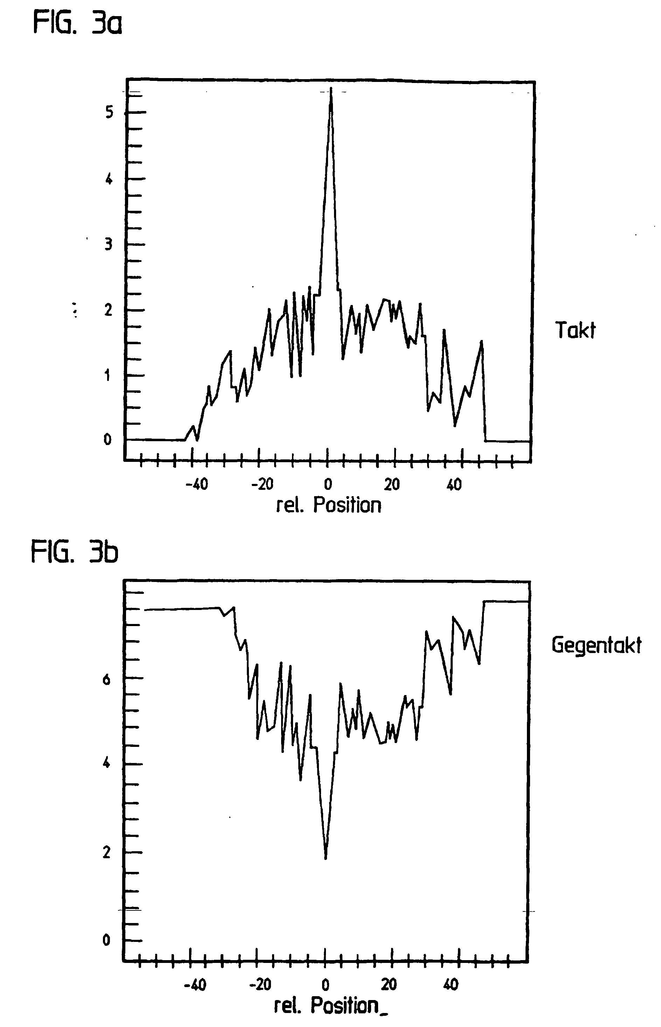

Eine weitere Möglichkeit zur Erzeugung eines zweiten, komplementären Referenzimpulssignales besteht darin, die Referenzimpuls-Maßstabstrukturen des komplementären, zweiten Referenzimpulssignales invers zu den Referenzimpuls-Maßstabstrukturen des ersten Referenzimpulssignales auszubilden. Die Erzeugung des komplementären, zweiten Referenzimpulssignales entspricht damit der bekanten Bildung eines sogenannten "echten" Gegentakt-Referenzimpulssignales. Im Fall von Strukturen mit reflektierenden und nicht-refelktirenden Bereichen bedeutet dies etwa, daß an derjenigen Stelle der Maßstab-Referenzimpulsstruktur für das erste Referenzimpulssignal, an der z.B. ein reflektierender Bereich ist, im Fall der Maßstab-Referenzimpulsstruktur des zweiten, komplementären Referenzimpulssignales ein nicht-reflektierender Bereich angeordnet ist usw.. Der Signalverlauf eines ersten, erfindungsgemäß erzeugten Referenzimpulssignales ist in Figur 3a dargestellt. Ein zweites Ausführungsbeispiel bzgl. der Erzeugung eines komplementären, zweiten Referenzimpulssignales ist in Figur 3b gezeigt, nunmehr wie oben erläutert als "echtes" Gegentakt-Referenzimpulssignal ausgebildet.

In der nachfolgenden Tabelle 2a ist wiederum die Verteilung von Bereichen innerhalb der verschiedenen Strukturen aufgeführt, über die die Erzeugung einer Signalform gemäß Figur 3a möglich ist.

**Tabelle 2a**

| |
|---|
| Referenzimpuls-Sendestruktur (15 Bereiche, Breite je 40µm) |
| durchlässige Bereiche: 1, 2, 4, 5, 7, 9, 11, 14, 15 |
| Referenzimpuls-Maßstabstruktur (45 Bereiche, Breite je 20µm) |
| durchlässige Bereiche: 1, 5, 6, 8, 16, 17, 21, 23, 25, 29, 34, 35, 36, 45, |
| Referenzimpuls-Abtaststruktur (23 Bereiche, Breite je 40µm) |
| durchlässige Bereiche: 1, 9, 13, 19, 22, 23 |

Ein "echtes" Gegentakt-Referenzimpulssignal gemäß Figur 3b ergibt sich auf Grundlage von Verteilungen für die verschiedenen Strukturen gemäß der nachfolgenden Tabelle 2b.

**Tabelle 2b**

| |
|---|
| Referenzimpuls-Sendestruktur (15 Bereiche, Breite je 40µm) |
| durchlässige Bereiche: 1, 2, 4, 5, 7, 9, 11, 14, 15 |
| Referenzimpuls-Maßstabstruktur (45 Bereiche, Breite je 20µm) |
| durchlässige Bereiche: 2, 3, 4, 7, 9, 10, 11, 12, 13, 14, 15, 18, 19, 20, 22, 24, 26, 27, 28, 30, 31, 32, 33, 37, 38, 39, 40, 41, 42, 43, 44 |
| Referenzimpuls-Abtaststruktur (23 Bereiche, Breite je 40µm) |
| durchlässige Bereiche: 1, 9, 13, 19, 22, 23 |

Zur Erzeugung der beiden unterschiedlichen Signalformen gemäß den Figuren 3a und 3b sind demzufolge zueinander inverse Verteilungen der Bereiche auf Seiten der Referenzimpuls-Maßstabstrukturen vorgesehen. In der Regel sind zu diesem Zweck zwei unterschiedlich ausgebildete Felder mit derartigen Verteilungen auf dem Maßstab angeordnet. Die Abtastung der beiden Felder kann mit Hilfe einer Abtasteinheit erfolgen, die zur Erzeugung der dargestellten Signalformen identische Referenzimpuls-Sende- und Abtaststrukturen aufweist.

Hinsichtlich der Anordnung der erfindungsgemäß ausgebildeten Referenzimpuls-Strukturen relativ zur Inkrementalteilung der optischen Positionsmeßeinrichtung ergeben sich eine Reihe von Möglichkeiten, die nachfolgend anhand der Ausführungsbeispiele der Figuren 5a-5d kurz erläutert seien. Dargestellt ist hierbei jeweils lediglich eine Draufsicht auf einen Maßstab, demgegenüber in x-Richtung beweglich eine nicht-dargestellte Abtasteinheit angeordnet ist.
Im Ausführungsbeispiel der Figur 5a ist auf Seiten des Maßstabes eine erfindungsgemäß ausgebildete Referenzimpuls-Maßstabstruktur M seitlich benachbart zu einer Inkrementalteilung IT angeordnet, d.h. senkrecht zur Meßrichtung x. Entsprechend ist auf Seiten der Abtasteinheit dann seitlich benachbart zur Inkremental-Abtastteilung eine erfindungsgemäß ausgebildete Referenzimpuls-Abtaststruktur angebracht. Mit Hilfe einer derartigen Anordnung läßt sich demzufolge ein erstes Referenzimpulssignal bei einer definierten Relativlage von Maßstab und Abtasteinheit erzeugen.

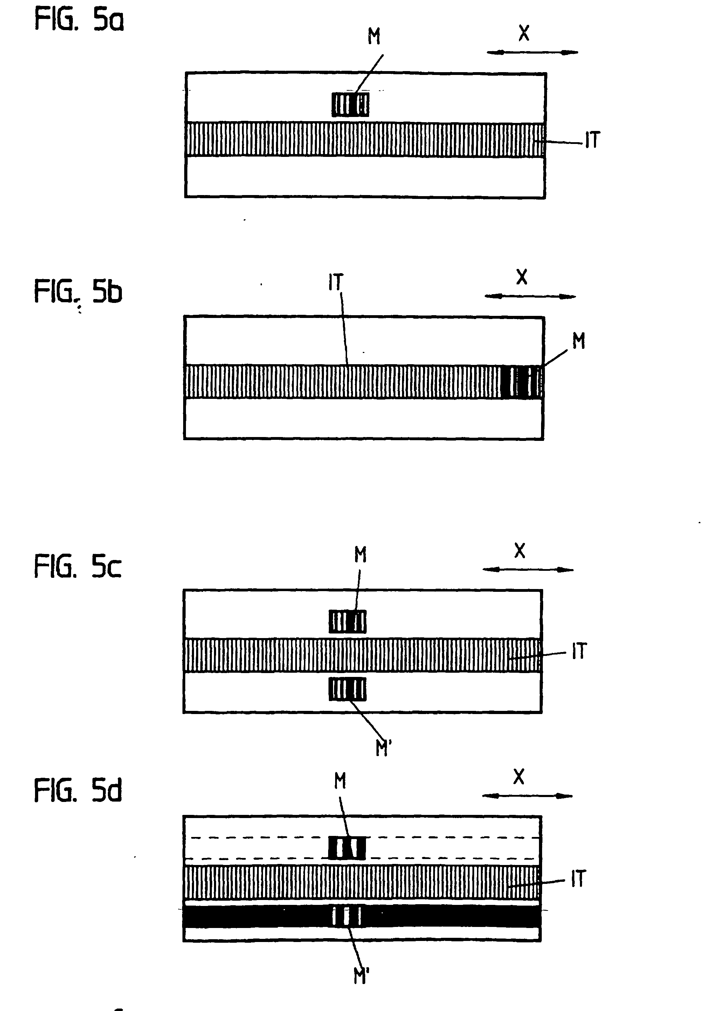

Eine alternative Möglichkeit, die erfindungsgemäß ausgebildete Referenzimpuls-Maßstabstruktur anzuordnen ist in Figur 5b dargestellt. Dort ist vorgesehen, mindestens eine entsprechende Referenzimpuls-Maßstabstruktur M an einem Ende der Inkrementalteilung IT anzubringen.

Grundsätzlich wäre es selbstverständlich ebenfalls noch möglich, eine erfindungsgemäß ausgestaltete Referenzimpuls-Maßstabstruktur M unmittelbar in die Inkrementalteilung IT zu integrieren und die Abtastseite geeignet auszugestalten.

Eine Möglichkeit zur Anordnung von Referenzimpuls-Maßstabstrukturen M, M', die ein erstes und ein zweites bzw. komplementäres Referenzimpulssignal an einer definierten Relativposition erzeugen, ist in Figur 5c gezeigt. Die beiden Referenzimpuls-Maßstabstrukturen M, M' sind hierbei jeweils seitlich benachbart zur Inkrementalteilung IT auf dem Maßstab angeordnet. Die beiden Referenzimpuls-Maßstabstrukturen M, M' können dabei etwa identisch wie bei den Ausführungsbeispielen der Tabellen 1a und 1b ausgebildet sein. Unterschiedlich sind gemäß den Tabellen 1a und 1b jedoch die zugehörigen Referenzimpuls-Abtaststrukturen auf Seiten der - nicht dargestellten - Abtasteinheit ausgebildet, um durch die Abtastung der Referenzimpuls-Maßstabstruktur ein komplementäres zweites Referenzimpulssignal zu erzeugen. Alternativ können aber auch die beiden Referenzimpuls-Maßstabstrukturen unterschiedlich ausgebildet sein, während die zur Abtastung erforderlichen Referenzimpuls-Sende- und Abtaststrukturen identisch ausgebildet sind, d.h. diese Variante liefert Referenzimpulssignale entsprechend den Figuren 3a und 3b auf Grundlage der Verteilungen in den Tabellen 2a und 2b.

Insbesondere die Ausführungsformen der Figuren 5b, 5c und 5d erweisen sich hinsichtlich ihrer Moiré-Unempfindlichkeit als vorteilhaft. Dies bedeutet, daß auch bei einer eventuellen Verdrehung der Abtasteinheit um eine Achse senkrecht zur Meßrichtung x ein Referenzimpulsignal an der gewünschten Position resultiert.

Ebenso können jedoch auch gemäß Figur 5d Referenzimpuls-Maßstabstrukturen M und M' seitlich benachbart zur Inkrementalteilung IT angeordnet werden, die in bekannter Art und Weise ein Takt- und Gegentakt-Referenzimpulssignal liefern. In diesem Fall sind die jeweiligen Referenzimpuls-Strukturen invers zueinander ausgebildet, d.h. an den gleichen x-Positionen sind in einem der beiden Felder durchlässige Bereiche vorgesehen, während im anderen Feld dort undurchlässige Bereiche angeordnet sind etc.

Bei den in den Figuren 5a-5d gezeigten Ausführungsbeispielen kann es sich sowohl um Maßstäbe für Durchlicht- wie auch für Auflicht-Varianten der erfindungsgemäßen optischen Positionsmeßeinrichtung handeln. Je nachdem ist eine durchlässige oder aber eine reflektierende Inkrementalteilung IT einzusetzen.

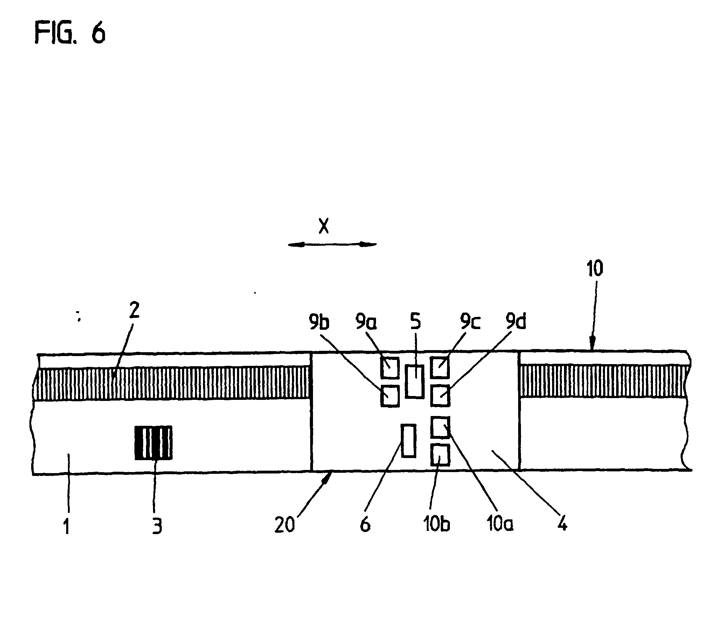

Eine weitere Ausführungsform der erfindungsgemäßen optischen Positionsmeßeinrichtung ist in Figur 6 in einer schematisierten Darstellung gezeigt, wobei es sich hierbei um eine Auflicht-Variante derselben handelt. Erkennbar sind in der Draufsicht gemäß Figur 6 dabei ein stationär angeordneter Maßstab 10 sowie eine relativ, in Meßrichtung x, hierzu bewegliche Abtasteinheit 20. Der Maßstab 10 besteht aus einem Teilungsträger 1, vorzugsweise aus Glas oder Stahl, auf dem in Meßrichtung x eine Inkrementalteilung 2 mit einer definierten Teilungsperiode TP angeordnet ist. Im dargestellten Bereich des Maßstabes 10 ist desweiteren ein Feld auf dem Teilungsträger 1 erkennbar, das die erfindungsgemäß ausgebildete Referenzimpuls-Maßstabstruktur 3 enthält.

Sowohl die Inkrementalteilung 2 als auch die Referenzimpuls-Maßstabstruktur 3 sind in dieser Ausführungsform der erfindungsgemäßen Positionsmeßeinrichtung als alternierende Abfolge von reflektierenden und nichtreflektierenden Bereichen ausgebildet. Die Längsrichtung der Bereiche mit unterschiedlichen optischen Eigenschaften ist in der Zeichenebene senkrecht zur Meßrichtung x orientiert.

Zur Erzeugung der inkrementellen Positionssignale umfaßt die Abtasteinheit 20 eine Lichtquelle 5, vorzugsweise ausgebildet als LED. Um die Lichtquelle 5 herum sind insgesamt vier Detektorelemente 9a, 9b, 9c, 9d erkennbar, mittels der die von der Inkrementalteilung 2 reflektierten Strahlenbündel erfaßt werden. Die Anordnung der Detektorelemente 9a - 9d erfolgt dabei dergestalt, daß damit jeweils um 90° phasenversetzte Abtastsignale erzeugbar sind. Auf einem lichtdurchlässigen Trägerelement 4 sind desweiteren - in Figur 6 nicht erkennbare - Strukturierungen vorgesehen, die im Bereich vor der Lichtquelle 5 als Sendestruktur wirken und im Bereich vor den lichtempfindlichen Detektorflächen als Abtaststrukturen für die Inkrementalteilung 2 fungieren. Die Kontaktierung der Detektorelemente 9a - 9d und der Lichtquelle 5 erfolgt mittels einer ebenfalls nicht dargestellten Leiterplatte, über die zudem auch die mechanische Stabilisierung der Abtasteinheit 20 erfolgt.

Zur erfindungsgemäßen Erzeugung von Referenzimpulssignalen ist auf Seiten der Abtasteinheit 20 eine weitere Lichtquelle 6 vorgesehen, die ebenfalls auf dem Trägerelement 4 angeordnet ist und mittels einer Leiterplatte oder eines flexiblen Leiterbandes kontaktierbar ist. Seitlich benachbart zur Lichtquelle 6 sind zwei Detektorelemente 10a, 10b erkennbar, über die ein erstes und ein zweites Referenzimpulssignal erfaßbar ist. Hierbei werden über die beiden Detektorelemente 10a, 10b zueinander komplementäre Referenzimpulssignale detektiert, die entsprechend den vorab erläuterten Prinzipien erzeugt werden können.
Die Referenzimpuls-Sendestruktur ist in dieser Ausführungsform auf dem Trägerelement 4 der Abtasteinheit im Bereich vor der Lichtquelle 6 angeordnet. Ebenfalls auf dem Trägerelement 4 sind die Referenzimpuls-Abtaststrukturen vor den lichtempfindlichen Flächen der Detektorelemente 10, 10b angebracht.
Die Verteilungen der optisch durchlässigen und nicht-durchlässigen Bereiche in den Referenzimpuls-Sende-, Maßstab- und Abtaststrukturen wurden wiederum gemäß dem oben erläuterten Optimierungsverfahren aufeinander abgestimmt.

Das in Figur 6 dargestellte Ausführungsbeispiel der erfindungsgemäßen optischen Positionsmeßeinrichtung gewährleistet eine besonders kompakte Bauweise und ermöglicht die Erzeugung hochauflösender Referenzimpulssignale. Selbstverständlich sind im Rahmen der erfindungsgemäßen Überlegungen jedoch auch alternative Ausführungsvarianten realisierbar. Beispielsweise kann auf Seiten der Abtasteinheit auch lediglich eine einzige Lichtquelle zur Erzeugung der Inkrementalsignale und der Referenzimpulssignale eingesetzt werden. Ferner existieren - wie bereits erwähnt - verschiedene Möglichkeiten hinsichtlich der Erzeugung zweier komplementärer Referenzimpulssignale. So können z.B. gleiche Sende- und Maßstabstrukturen, aber unterschiedliche Abtaststrukturen eingesetzt werden. Daneben ist es möglich verschiedene Sendestrukturen, eine identische Maßstabstruktur und wiederum zwei unterschiedliche Abtatstrukturen zur Erzeugung der zwei komplementären Referenzimpulssignale vorzusehen. Ebenso könnte jedoch auch eine gemeinsame Sendestruktrur und jeweils unterschiedliche Maßstab- und Abtastrukturen zu diesem Zweck eingesetzt werden usw..
Es resultieren somit sowohl im Rahmen dieser Ausführungsform als auch im Rahmen der vorab erläuterten Varianten eine Reihe von Möglichkeiten, die erfindungsgemäßen Maßnahmen je nach Anwendung zu variieren.

## Patentansprüche

1. Optische Positionsmeßeinrichtung, über die anderen Positionssignalen bezüglich der Relativlage zweier zueinander beweglicher Objekte auch mindestens ein Referenzimpulssignal bezüglich einer definierten Relativposition der zwei Objekte erzeugbar ist, mit
- einer Lichtquelle (LQ),
- einer vor der Lichtquelle (LQ) angeordneten Referenzimpuls-Sendestruktur (S), die eine erste, unregelmäßige Verteilung von Bereichen (S_{U}, S_{D}) mit zwei unterschiedlichen optischen Eigenschaften aufweist, wobei der Strahlengang zwischen der Lichtquelle (LQ) und der Referenzimpuls-Sendestruktur (S) divergent ist,
- einer in Richtung der Strahlausbreitung benachbart zur Referenzimpuls-Sendestruktur (S) angeordneten Referenzimpuls-Maßstabstruktur (M), die eine zweite unregelmäßige Verteilung von Bereichen (M_{U}, M_{D}) mit zwei unterschiedlichen optischen Eigenschaften aufweist,
- einer Referenzimpuls-Abtaststruktur (A), die der Referenzimpuls-Maßstabstruktur (M) nachgeordnet ist und die eine dritte unregelmäßige Verteilung von Bereichen (A_{U}, A_{D}) mit zwei unterschiedlichen optischen Eigenschaften aufweist, wobei die Referenzimpuls-Maßstabstruktur (M) gegenüber der Referenzimpuls-Sendestruktur (S) und der Referenzimpuls-Abtaststruktur (A) beweglich angeordnet ist sowie
- mindestens einem optoelektronischen Detektorelement (D) zur Erfassung der transmittierten und/oder reflektierten Strahlenbündel,
- wobei die drei Verteilungen von Bereichen (S_{U}, S_{D}, M_{U}, M_{D}, A_{U}, A_{D}) mit unterschiedlichen optischen Eigenschaften derart gewählt sind, daß bei einer definierten Relativposition der zueinander beweglichen Strukturen Strahlenbündel aus einem Bereich (M_{U}, M_{D}) der Referenzimpuls-Maßstabstruktur (M) mit mehreren Bereichen (A_{U}, A_{D}) der Referenzimpuls-Abtaststruktur (A) wechselwirken, so daß über das mindestens eine optoelektronische Detektorelement (D) ein erstes Referenzimpulssignal hinreichender Intensität erfaßbar ist.

2. Optische Positonsmeßeinrichtung nach Anspruch 1, wobei Strahlenbündel aus einem Bereich (M_{U}, M_{D}) der Referenzimpuls-Maßstabstruktur (M) bei der definierten Relativposition mehrere optisch durchlässige Bereiche (A_{D}) der Referenzimpuls-Abtaststruktur (A) durchtreten.

3. Optische Positonsmeßeinrichtung nach Anspruch 1, wobei die Bereiche (S_{U}, S_{D}, M_{U}, M_{D}, A_{U}, A_{D}) mindestens zweier Strukturen (S, M, A) alternierend optisch durchlässig und nicht-durchlässig ausgebildet sind.

4. Optische Positonsmeßeinrichtung nach Anspruch 1, wobei die Bereiche (S_{U}, S_{D}, M_{U}, M_{D}, A_{U}, A_{D}) mindestens einer Struktur (S, M, A) alternierend reflektierend und nicht-reflektierend ausgebildet sind.

5. Optische Positionsmeßeinrichtung nach Anspruch 1, wobei die Referenzimpuls-Sendestruktur (S) und die Referenzimpuls-Abtaststruktur (A) alternierend angeordnete, optisch durchlässige und nicht-durchlässige Bereiche (S_{U}, S_{D}, A_{U}, A_{D}) umfaßt und die Referenzimpuls-Maßstabstruktur (M) alternierend angeordnete, reflektierende und nicht-reflektierende Bereiche (M_{U}, M_{D}) umfaßt.

6. Optische Positionsmeßeinrichtung nach Anspruch 3, wobei die Referenzimpuls-Sendestruktur (S) auf einem ersten Trägerelement, die Referenzimpuls-Abtaststruktur (A) auf einem zweiten Trägerelement und die Referenzimpuls-Maßstabstruktur (M) auf einem dritten Trägerelement angeordnet ist, wobei das zweite Trägerelement gegenüber dem ersten und dem dritten Trägerelement beweglich angeordnet ist.

7. Optische Positionsmeßeinrichtung nach Anspruch 6, wobei alle drei Trägerelemente lichtdurchlässig ausgebildet sind.

8. Optische Positionsmeßeinrichtung nach Anspruch 7, wobei auf dem dritten Trägerelement desweiteren mindestens eine inkrementelle Maßstabteilung (IT) und auf dem zweiten Trägerelement eine inkrementelle Abtastteilung angeordnet ist, über die die Erzeugung der inkrementellen Positionssignale möglich ist.

9. Optische Positionsmeßeinrichtung nach Anspruch 5, wobei die Referenzimpuls-Sendestruktur (S) und die Referenzimpuls-Abtaststruktur (A) auf einem gemeinsamen ersten Trägerelement angeordnet sind und die Referenzimpuls-Maßstabstruktur (M) auf einem zweiten Trägerelement angeordnet ist, welches gegenüber dem ersten Trägerelement beweglich angeordnet ist.

10. Optische Positionsmeßeinrichtung nach Anspruch 9, wobei das erste Trägerelement lichtdurchlässig ausgebildet ist.

11. Optische Positionsmeßeinrichtung nach Anspruch 9, wobei auf dem ersten Trägerelement auch die Lichtquelle (LQ) sowie mindestens ein optoelektronisches Detektorelement (D) angeordnet ist.

12. Optische Positionsmeßeinrichtung nach Anspruch 9, wobei auf dem zweiten Trägerelement desweiteren mindestens eine inkrementelle Maßstabteilung (IT) und auf dem ersten Trägerelement eine inkrementelle Abtastteilung angeordnet ist, über die die Erzeugung der inkrementellen Positionssignale möglich ist.

13. Optische Positionsmeßeinrichtung nach Anspruch 1, wobei eine zweite Referenzimpuls-Sendestruktur, eine zweite Referenzimpuls-Maßstabstruktur sowie eine zweite Referenzimpuls-Abtaststruktur vorgesehen sind, die ebenfalls von der Lichtquelle beleuchtet werden und denen mindestens ein zweites optoelektronisches Detektorelement zur Erfassung eines zweiten Referenzimpulssignales zugeordnet ist, wobei die zweite Referenzimpuls-Sendestruktur, die zweite Referenzimpuls-Maßstabstruktur und die zweite Referenzimpuls-Abtaststruktur derart dimensioniert sind, daß ein zum ersten Referenzimpulssignal komplementäres zweites Referenzimpulssignal resultiert.

14. Optische Positionsmeßeinrichtung nach Anspruch 8 oder 12, wobei mindestens eine Referenzimpuls-Maßstabstruktur (M') seitlich benachbart zur inkrementellen Maßstabteilung (IT) angeordnet ist.

15. Optische Positionsmeßeinrichtung nach Anspruch 8 oder 12 und 13, wobei die erste und zweite Referenzimpuls-Maßstabstruktur (M, M') beidseitig benachbart zur inkrementellen Maßstabteilung (IT) angeordnet sind.

16. Optische Positionsmeßeinrichtung nach Anspruch 8 und 13 oder 12, wobei mindestens eine Referenzimpuls-Maßstabstruktur (M, M') seitlich benachbart zur inkrementellen Maßstabteilung (IT) angeordnet ist.

17. Optische Positionsmeßeinrichtung nach Anspruch 13, wobei die zweite Referenzimpuls-Maßstabstruktur invers zur ersten Referenzimpuls-Maßstabstruktur ausgebildet ist, während die Referenzimpuls-Sende-und -Abtaststrukturen zur Erzeugung des ersten und zweiten Referenzimpulssignales identisch ausgebildet sind.

18. Optische Positionsmeßeinrichtung nach Anspruch 1, wobei die Abtaststruktur durch eine Strukturierung der lichtempfindlichen Fläche des optoelektronischen Detektorelementes gebildet ist.

## Claims

1. Optical position measuring device, also at least one reference pulse signal with respect to a defined relative position of two objects is able to be generated via the other position signals with respect to the relative position of two objects which are moveable relative to each other, having
- a light source (LQ),
- a reference pulse transmitting structure (S) which is disposed in front of the light source (LQ) and has a first, irregular distribution of regions (S_{U}, S_{D}) with two different optical properties, the beam path between the light source (LQ) and the reference pulse transmitting structure (S) being divergent,
- a reference pulse scale structure (M) which is disposed in the direction of the beam propagation adjacent to the reference pulse transmitting structure (S) and has a second irregular distribution of regions (M_{U}, M_{D}) with two different optical properties,
- a reference pulse scanning structure (A) which is disposed after the reference pulse scale structure (M) and which has a third irregular distribution of regions (A_{U}, A_{D}) with two different optical properties, the reference pulse scale structure (M) being disposed moveably relative to the reference pulse transmitting structure (S) and the reference pulse scanning structure (A), and
- at least one opto-electronic detector element (D) for detecting the transmitted and/or reflected bundles of rays,
- the three distributions of regions (S_{U}, S_{D}, M_{U}, M_{D}, A_{U}, A_{D}) with different optical properties being chosen in such a manner that, in the case of a defined relative position of the structures which are moveable relative to each other, bundles of rays from one region (M_{U}, M_{D}) of the reference pulse scale structure (M) interact with a plurality of regions (A_{U}, A_{D}) of the reference pulse scanning structure (A) so that, via the at least one opto-electronic detector element (D), a first reference pulse signal of sufficient intensity can be detected.

2. Optical position measuring device according to claim 1, bundles of rays from one region (M_{U}, M_{D}) of the reference pulse scale structure (M) penetrating, at the defined relative position, a plurality of optically transparent regions (A_{D}) of the reference pulse scanning structure (A).

3. Optical position measuring device according to claim 1, the regions (S_{U}, S_{D}, M_{U}, M_{D}, A_{U}, A_{D}) at least of two structures (S, M, A) being configured to be alternately optically transparent and non-transparent.

4. Optical position measuring device according to claim 1, the regions (S_{U}, S_{D}, M_{U}, M_{D}, A_{U}, A_{D}) at least of one structure (S, M, A) being configured to be alternately reflecting and non-reflecting.

5. Optical position measuring device according to claim 1, the reference pulse transmitting structure (S) and the reference pulse scanning structure (A) comprising alternately disposed, optically transparent and non-transparent regions (S_{U}, S_{D}, A_{U}, A_{D}) and the reference pulse scale structure (M) comprising alternately disposed, reflecting and non-reflecting regions (M_{U}, M_{D})

6. Optical position measuring device according to claim 3, the reference pulse transmitting structure (S) being disposed on a first carrier element, the reference pulse scanning structure (A) on a second carrier element and the reference pulse scale structure (M) on a third carrier element, the second carrier element being disposed moveably relative to the first and to the third carrier element.

7. Optical position measuring device according to claim 6, all three carrier elements having a transparent configuration.

8. Optical position measuring device according to claim 7, at least one incremental scale division (IT) being disposed furthermore on the third carrier element and an incremental scanning division on the second carrier element, via which the generation of the incremental position signals is possible.

9. Optical position measuring device according to claim 5, the reference pulse transmitting structure (S) and the reference pulse scanning structure (A) being disposed on a common first carrier element and the reference pulse scale structure (M) being disposed on a second carrier element which is disposed moveably relative to the first carrier element.

10. Optical position measuring device according to claim 9, the first carrier element having a transparent configuration.

11. Optical position measuring device according to claim 9, the light source (LQ) and also at least one opto-electronic detector element (D) also being disposed on the first carrier element.

12. Optical position measuring device according to claim 9, at least one incremental scale division (IT) being disposed furthermore on the second carrier element and an incremental scanning division on the first carrier element, via which the generation of the incremental position signals is possible.

13. Optical position measuring device according to claim 1, a second reference pulse transmitting structure, a second reference pulse scale structure and also a second reference pulse scanning structure being provided, which are likewise illuminated by the light source and to which at least one second opto-electronic detector element for detecting a second reference pulse signal is assigned, the second reference pulse transmitting structure, the second reference pulse scale structure and the second reference pulse scanning structure being dimensioned in such a manner that a second reference pulse signal which is complementary to the first reference pulse signal results.

14. Optical position measuring device according to claim 8 or 12, at least one reference pulse scale structure (M') being disposed laterally adjacent to the incremental scale division (IT).

15. Optical position measuring device according to claim 8 or 12 and 13, the first and second reference pulse scale structure (M, M') being disposed adjacent to the incremental scale division (IT) on both sides.

16. Optical position measuring device according to claim 8 and 13 or 12, at least one reference pulse scale structure (M, M') being disposed laterally adjacent to the incremental scale division (IT).

17. Optical position measuring device according to claim 13, the second reference pulse scale structure being configured inversely to the first reference pulse scale structure, whilst the reference pulse transmitting and reference pulse scanning structures for generating the first and second reference pulse signal have an identical configuration.

18. Optical position measuring device according to claim 1, the scanning structure being formed by structuring of the light-sensitive surface of the opto-electronic detector element.

## Revendications

1. Dispositif optique de mesure de position qui permet de produire, outre des signaux de position concernant la position relative de deux objets pouvant être déplacés l'un par rapport à l'autre, au moins un signal impulsionnel de référence concernant une position relative définie des deux objets, comprenant
- une source lumineuse (LQ),
- une structure émettrice d'impulsions de référence (S) qui est disposée devant la source lumineuse (LQ) et présente une première répartition irrégulière de zones (S_{U}, S_{D}) avec deux propriétés optiques différentes, le trajet des rayons entre la source lumineuse (LQ) et la structure émettrice d'impulsions de référence (S) étant divergent,
- une structure de règle de mesure d'impulsions de référence (M) qui est disposée dans le voisinage de la structure émettrice d'impulsions de référence (S), dans la direction de propagation des rayons, et qui présente une deuxième répartition irrégulière de zones (M_{U}, M_{D}) avec deux propriétés optiques différentes,
- une structure de palpage d'impulsions de référence (A) qui est disposée à la suite de la structure de règle de mesure d'impulsions de référence (M) et présente une troisième répartition irrégulière de zones (A_{U}, A_{D}) avec deux propriétés optiques différentes, la structure de règle de mesure d'impulsions de référence (M) étant installée avec possibilité de déplacement par rapport à la structure émettrice d'impulsions de référence (S) et à la structure de palpage d'impulsions de référence (A), et
- au moins un élément détecteur (D) optoélectronique pour détecter les faisceaux de rayons transmis et/ou réfléchis,
- les trois répartitions de zones (S_{U}, S_{D}, M_{U}, M_{D}, A_{U}, A_{D}) avec des propriétés optiques différentes étant choisies de manière telle que pour une position relative définie des structures déplaçables les unes par rapport aux autres, des faisceaux de rayons d'une zone (M_{U}, M_{D}) de la structure de règle de mesure d'impulsions de référence (M) soient en interaction avec plusieurs zones (A_{U}, A_{D}) de la structure de palpage d'impulsions de référence (A), de sorte que l'élément détecteur (D) optoélectronique, au nombre d'au moins un, puisse détecter un premier signal impulsionnel de référence d'intensité suffisante.

2. Dispositif optique de mesure de position selon la revendication 1, dans lequel, lorsque la position relative définie est atteinte, des faisceaux de rayons d'une zone (M_{U}, M_{D}) de la structure de règle de mesure d'impulsions de référence (M) traversent plusieurs zones (A_{D}) optiquement transparentes de la structure de palpage d'impulsions de référence (A).

3. Dispositif optique de mesure de position selon le revendication 1, dans lequel les zones (S_{U}, S_{D}, M_{U}, M_{D}, A_{U}, A_{D}) d'au moins deux structures (S, M, A) sont réalisées de manière à être en alternance optiquement transparentes et non transparentes.

4. Dispositif optique de mesure de position selon la revendication 1, dans lequel les zones (S_{U}, S_{D}, M_{U}, M_{D}, A_{U}, A_{D}) d'au moins une structure (S, M, A) sont réalisées de manière à être en alternance réfléchissantes et non réfléchissantes.

5. Dispositif optique de mesure de position selon la revendication 1, dans lequel la structure émettrice d'impulsions de référence (S) et la structure de palpage d'impulsions de référence (A) comprennent des zones (S_{U}, S_{D}, A_{U}, A_{D}) optiquement transparentes et non transparentes disposées en alternance, et la structure de règle de mesure d'impulsions de référence (M) comprend des zones (M_{U}, M_{D}) réfléchissantes et non réfléchissantes disposées en alternance.

6. Dispositif optique de mesure de position selon la revendication 3, dans lequel la structure émettrice d'impulsions de référence (S) est disposée sur un premier élément support, la structure de palpage d'impulsions de référence (A) est disposée sur un deuxième élément support, et la structure de règle de mesure d'impulsions de référence (M) est disposée sur un troisième élément support, le deuxième élément support pouvant être déplacé par rapport aux premier et troisième éléments supports.

7. Dispositif optique de mesure de position selon la revendication 6, dans lequel les trois éléments supports sont transparents.

8. Dispositif optique de mesure de position selon la revendication 7, dans lequel le troisième élément support porte en outre au moins une graduation incrémentale de règle de mesure (IT), et le deuxième élément support porte une graduation de palpage incrémentale qui permet de générer les signaux de position incrémentaux.

9. Dispositif optique de mesure de position selon la revendication 5, dans lequel la structure émettrice d'impulsions de référence (S) et la structure de palpage d'impulsions de référence (A) sont disposées sur un premier élément support commun, et la structure de règle de mesure d'impulsions de référence (M) est disposée sur un deuxième élément support qui peut être déplacé par rapport au premier élément support.

10. Dispositif optique de mesure de position selon la revendication 9, dans lequel le premier élément support est transparent.

11. Dispositif optique de mesure de position selon la revendication 9, dans lequel le premier élément support porte également la source lumineuse (LQ) et au moins un élément détecteur (D) optoélectronique.

12. Dispositif optique de mesure de position selon la revendication 9, dans lequel le deuxième élément support porte en outre au moins une graduation incrémentale de règle de mesure (IT) et le premier élément support porte une graduation de palpage incrémentale qui permet de générer les signaux de position incrémentaux.

13. Dispositif optique de mesure de position selon la revendication 1, dans lequel il est prévu une deuxième structure émettrice d'impulsions de référence, une deuxième structure de règle de mesure d'impulsions de référence et une deuxième structure de palpage d'impulsions de référence, qui sont également éclairées par la source lumineuse et auxquelles est associé au moins un deuxième élément détecteur optoélectronique pour détecter un deuxième signal impulsionnel de référence, la deuxième structure émettrice d'impulsions de référence, la deuxième structure de règle de mesure d'impulsions de référence et la deuxième structure de palpage d'impulsions de référence étant dimensionnées de manière telle qu'il en résulte un deuxième signal impulsionnel de référence qui soit complémentaire du premier signal impulsionnel de référence.

14. Dispositif optique de mesure de position selon la revendication 8 ou 12, dans lequel au moins une structure de règle de mesure d'impulsions de référence (M) est disposée sur le côté et à proximité de la graduation incrémentale de règle de mesure (IT).

15. Dispositif optique de mesure de position selon les revendications 8 ou 12 et 13, dans lequel les première et deuxième structures de règle de mesure d'impulsions de référence (M, M') sont disposées sur le côté et à proximité de la graduation incrémentale de règle de mesure (IT).

16. Dispositif optique de mesure de position selon les revendications 8 et 13 ou 12, dans lequel au moins une structure de règle de mesure d'impulsions de référence (M, M') est disposée sur le côté et à proximité de la graduation incrémentale de règle de mesure (IT).

17. Dispositif optique de mesure de position selon la revendication 13, dans lequel la deuxième structure de règle de mesure d'impulsions de référence est réalisée inversement à la première structure de règle de mesure d'impulsions de référence, tandis que la structure émettrice d'impulsions de référence et la structure de palpage d'impulsions de référence, destinées à produire le premier et le deuxième signal impulsionnel de référence, sont réalisées de façon identique.

18. Dispositif optique de mesure de position selon la revendication 1, dans lequel la structure de palpage est formée d'une structuration de la surface sensible à la lumière de l'élément détecteur optoélectronique.
